# EUROPEAN PATENT APPLICATION

(11) **EP 2 998 947 A1**
(43) Date of publication of application: **23.03.2016**
(21) Application number: 14184954.7
(22) Date of filing: 16.09.2014
(51) Int. Cl.: G09B 21/00, G06F 3/01

(54) **Dynamic shape display**

(71) Applicant: Vaccaro, Johnny, 6976 Castagnola (CH); Caprari, Gilles, 6900 Lugano (CH)
(72) Inventor: Vaccaro, Johnny, 6976 Castagnola (CH); Caprari, Gilles, 6900 Lugano (CH)
(74) Representative: Zardi, Marco

(57) **Abstract**

A display comprising a substrate and a flexible opaque layer over said substrate, comprising output means adapted to individually and independently apply a mechanical action to said flexible layer through apertures of the substrate, to deform selected portions of the flexible layer facing the apertures thus providing a pattern of embossed or engraved portions and relaxed portions of the flexible layer to display information on the surface of the flexible layer.

## Description

### Field of the invention

The invention relates to a dynamic shape display comprising an active surface which can be dynamically embossed or engraved.

### Prior art

Conventional displays, such as LED displays, are purely visual. In the prior art, alternative displays have been proposed for the benefit of visually impaired people. For example, WO 00/22596 discloses a refreshable Braille display system comprising a plurality of Braille dots that extend and retract upon the operation of a micro-electromechanical device. The Braille dots are operable as a personal computer monitor allowing a blind person to discern the information displayed thereon by reading the Braille characters.

The purpose of the invention is to provide a novel and more versatile display, suitable to show virtually any kind of information by dynamically embossing or engraving a surface. Another purpose is to provide a display suitable for the implementation in a wide range of devices, including small personal devices, such as a wrist watch, mobile phone or tablet computer for example.

### Summary of the invention

The above purpose is reached with a display according to claim 1. Preferred features of the display are in accordance with the dependent claims.

A display according to the invention comprises a substrate and a flexible opaque layer which extends over said substrate. A top surface of the substrate faces the flexible layer, possibly being in contact with said flexible layer, and has a plurality of apertures arranged according to a determined pattern. The display comprises output means adapted to individually and independently apply a mechanical action to the flexible layer, through each one of said apertures of the substrate, so to induce a local deformation of selected portions of flexible cover.

The display comprises control means adapted to determine a subset of said apertures where the action of said output means is applied, said subset being in accordance to an input pattern. Hence, a corresponding distribution of deformed portions and relaxed portions is generated on the flexible layer. The deformed portions are embossed or engraved relative to the relaxed surface. The deformed portions correspond to the desired information which appears on the surface of said layer.

The term of input pattern shall be intended as the input of the control system. From the user's point of view, the pattern of the deformed portions of the flexible layer is the output of the display.

The apertures on the top face of the substrate correspond to active zones of the flexible layer. The term of active zones denotes the portion of flexible layer exposed to said action of the output means, hence can be embossed or engraved selectively to show information. The remaining zones of the flexible layer, which face the upper surface of the substrate, are substantially unaffected by said action of the output means and hence they can be regarded as non-active zones.

An active zone of the flexible layer may be selectively put in an excited state, upon application of the force. Excited active zones are deformed, being for example raised or engraved, relative to the rest of the surface, i.e. to non-excited active portions and non-active portions. The deformed portions can be distinguished both in a visual and tactile manner. Hence corresponding information appears on the displaying surface and can be read by a user.

In a preferred embodiment, said output means are arranged to apply an inward force directed toward the substrate, the deformed portions of the flexible layer being physically engraved relative to relaxed portions of said layer.

The mechanical action can be applied to the flexible cover in a direct way or indirect way, according to different embodiments of the invention.

Direct application of the action can be made for example with mechanical actuators. Mechanical actuators may include an electric motor with a fixed part, such as a stator, and a moving part, such as a rotor or linear actuator. Micro or miniature electric motors may be used to carry out these embodiments of the invention.

In other embodiments with direct application of the force, mechanical actuators may include an active member adapted to switch between a first shape and a second shape upon activation, thus providing a controlled displacement which is then transmitted to the flexible cover via a suitable mechanical connection. Said activation may be given by temperature or voltage, for example. Said active member is preferably selected amongst: a shape memory alloy (SMA) actuator; an electro-active polymer (EAP) actuator; a piezoelectric actuator.

SMA actuators, EAP actuators and piezoelectric actuators are available and need not be described in detail. Said actuators are particularly preferred due to absence of moving parts and small size and weight, compared to conventional motors.

A SMA actuator includes an active member which is able to change its shape according to temperature, while EAP and piezoelectric actuators can change their shape upon application of a voltage. The active member may have different forms, e.g. a small block or a wire.

The active member of a SMA, EAP or piezo-electric device, or the moving part of a motor, may be connected to the flexible cover directly or by means of a connection link. In some embodiments, the connection link may be designed to amplify the displacement (stroke) of the active member. Amplification of the stroke may be useful especially with SMA or piezo-electric devices which typically have a small stroke.

Amplification of the stroke may also be obtained by arranging more than one device in series.

A motor or an active member, such as SMA or EAP or piezoelectric actuator, can be advantageously received in a recess or cavity of the substrate, thus being substantially embedded in the substrate. A related advantage is reduced thickness of the device.

Indirect application of the action is performed, according to other embodiments of the invention, by generating a pressure or underpressure on the inner side of the flexible layer, in a selected set of the apertures of the substrate. This can be made by changing the pressure of a fluid contained in the apertures of the substrate.

The outer side of the flexible layer is subject to an ambient pressure, which is normally the ambient pressure. By generating a different pressure (higher or lower) on the inner side, the corresponding portions of the flexible layer get deformed by the differential pressure and corresponding information appears on the displaying surface. Preferably the pressure on the inner side is lower than the ambient (outside) pressure, to obtain the above mentioned engraving effect of the flexible layer.

Preferably, the substrate comprises a plurality of cavities, each cavity being singularly on communication with one of the apertures, so that the deformation of the selected parts of the flexible layer is controlled by controlling the pressure in the cavities.

In these embodiments, the pressure is controlled by means of at least a pump. The term pump is used to denote also a suction pump which is able to provide a negative relative pressure.

The invention can be realized with a single-pump or multi-pump embodiments. In a single-pump embodiment, the pressure in the cavities of the substrate is controlled via a suitable valve system. In a multi-pump embodiment, each pump may control the pressure of a subset of the cavities or of a single cavity. In the latter case, the number of pumps is equal to the number of active zones of the display.

The pump(s) and/or the valve(s) may be operated by an electric motor, or by means of SMA, EAP or piezo-electric technique, or a micro-electro mechanical system (MEMS) integrated in a chip.

For example, a pump may be realized with a displacement member, such as a piston sliding in a cylinder, actuated by said electric motor, SMA, EAP or piezo-electric device or MEMS. Similarly, a valve suitable for the invention may comprise a body and a shutter which is actuated by an electric motor, SMA, EAP, piezo-electric device or MEMS.

In a particularly preferred multi-valve embodiment, said valves have a body with a planar upper face and a planar lower face and the valves are aligned in a pattern of rows and columns, to form a valve layer under the substrate. More preferably the valves are realized in form of tiles with a substantially square or rectangular shape, so that they can be regularly and densely adjoined to form said valve layer. Even more preferably, said realization is used in a single-pump embodiment, providing a main pump which can be put into communication with selected chambers of the substrate by means of opening a selected set of said valves.

The apertures of the substrate, and hence the active zones of the display, can have the same or different shape. Some or all apertures may have a specific shape, e.g. a geometrical shape or a symbol or a character which will appear on the display (raised or engraved) upon activation. This feature may be used to implement a number of on/off symbols or indicators on the display. Some or all apertures may have an elementary shape, e.g. dots or lines, so that a combination of the activated zones will generate complex characters, drawings or shapes. The above embodiments can be mixed, meaning a display may comprise both.

A preferred embodiment has active zones arranged as dots of a dot-matrix display. Another preferred embodiment has the active zones of the display arranged as one or more multi-segment display, to show alphanumeric characters. For example the active zones may form a number of seven-segment displays or variations thereof, such as fourteen- or sixteen-segment displays, or an equivalent.

The displaying surface may be flat or curved. In a curved embodiment, both the substrate and the flexible layer are curved, for example. A curved surface may be a portion of cylindrical or spherical surface.

According to still another embodiment, at least some of the apertures of the substrate are in communication with a respective pressure sensor, to detect a pressure exerted on the flexible layer above the aperture. In such embodiments, the display of the invention is able to receive an input signal from a user, for example pressing raised portions of the flexible layer.

The invention can be implemented in various kinds of devices. Preferred applications include the realization of a wristwatch, alarm clock, wall clock, advertising panels, various personal or home devices.

The flexible layer is made of an opaque material, i.e. it is not transparent.

The flexible layer is preferably a membrane. Preferred materials for the flexible layer are latex, silicon, or a suitable elastomer.

The invention has the following advantages. Depending on the number, shape and pattern of the apertures of the substrate, the active zones of the display may generate virtually any kind of information. The obtained display is then highly versatile. For example the invention allows creating a novel alphanumeric display.

When not activated, the top surface is flat and homogenous so that no pattern is visible; the information "magically" appears and vanishes with a surprising and unexpected effect, making the invention suitable for making attractive personal items.

For example the invention can be embodied in a wristwatch. A wristwatch with a display according to the invention will show a flat surface, appearing with no display, and upon activation (e.g. pressing a button), the current time and/or date or other information will be displayed in a three-dimensional manner, providing an attractive and surprising effect.

As a further advantage, the invention provides more freedom to the design of such items since the display is de facto invisible when not activated.

The display of the invention generates physically embossed or engraved figures or text, providing an unexpected and particularly attractive way of displaying information. Furthermore, the inventors have found that thanks to the shadow generated by the embossed or engraved surface, the information is readily visible even under poor light conditions and especially under a tangent light. In such a condition, the display of the invention is better visible than a conventional LED display, without the need of retro-illumination which requires energy. This advantage is obtained in particular with the engraved surface.

Another advantage is the information being displayed also in a tactile manner, due to the embossed or engraved surface.

An additional advantage is that the flexible layer protect the underneath mechanism. In a preferred embodiment, a display according to the invention is waterproof. Another advantage is the engraved surface can be sensed by visually-impaired people.

These and other advantages of the invention will be further elucidated with the help of the following description of some preferred embodiments.

### Description of the figures

Fig. 1 is a schematic cross section of a display according to an embodiment of the invention.
Fig. 2 shows the display of Fig. 1 when activated.
Fig. 3 is another embodiment of the invention where the display has a curved surface.
Figs. 4 is a scheme of an embodiment of the invention where the top membrane is actuated directly.
Fig. 5 is a scheme of an embodiment of the invention where the top membrane is actuated indirectly.
Fig. 6 is an example of appearance of a multi-segment display according to the invention.
Figs. 7 to 11 are examples of implementation of the embodiment of Fig. 4, with different mechanical actuators.
Figs. 12 is a scheme of a multi-pump implementation of the embodiment of Fig. 5.
Figs. 13 is a scheme of a single-pump, multi-valve implementation of the embodiment of Fig. 5.
Fig. 14 is a scheme of a multi-segment display using the single-pump, multi-valve feature of Fig. 13.
Figs. 15 to 18 are schemes of valves which can be used to carry out embodiments of the invention with indirect contact, for example the embodiments of Figs. 13 and 14.
Figs 19 to 23 are embodiments of pumps which can be used to realize the invention.
Fig. 24 shows a preferred arrangement of a pump and of a plurality of valves.
Fig. 25 shows another embodiment of the invention featuring also a pressure sensing ability.
Fig. 26 shows a wristwatch including a display in accordance with the invention.

### Detailed description of preferred embodiments

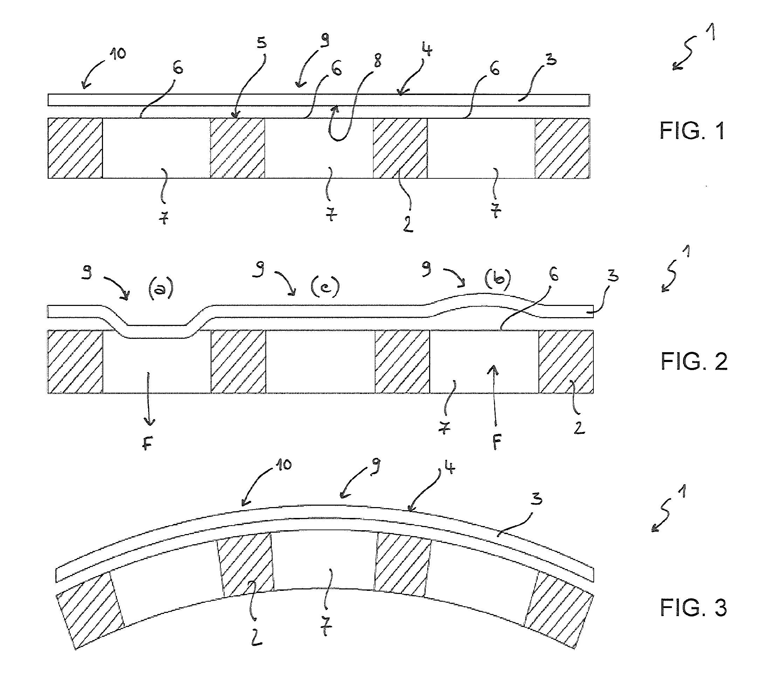

Fig. 1 shows a portion of a display 1 comprising a substrate 2 and a flexible layer formed by a flexible membrane 3 made of latex, silicon or of a suitable elastomer, arranged over said substrate 2. The membrane 3 may be in contact with the substrate 2 or slightly offset.

The membrane 3 has an outer face 4 opposite to the substrate 2, which provides a displaying surface of the display 1.

A top surface 5 of the substrate 2, facing the flexible membrane 3, has a plurality of apertures 6 which in this example are the upper section of cavities 7 of the substrate 2.

It can be seen that the inner face 8 of the membrane 3 is exposed in correspondence of each aperture 6. Hence, a pushing force or a traction force F (Fig. 2) can be applied to the membrane 3 via said passages 7 and apertures 6.

The zones 9 of the membrane 3 which lie over the apertures 6 can be termed active zones, while the remaining zones 10, facing the top surface of the substrate, can be regarded as non-active zones.

The display 1 comprises output means adapted to individually and independently apply a mechanical action to the membrane 3 through each one of said apertures 6 of the substrate, thus forming a desired pattern of raised (embossed) or engraved portions of said membrane 3 on the displaying surface 4.

Fig. 1 shows the flexible membrane 3 in a relaxed position, which means that the displaying surface 4 is smooth and, as such, it provides no information. Fig. 2 shows an example of some active portions 9 of the flexible membrane 3 in engraved state (a) or embossed state (b). The figure also shows one of the active portions 9 in a non-excited state (c).

Fig. 3 shows an embodiment where the display 1 and the surface 4 are curved.

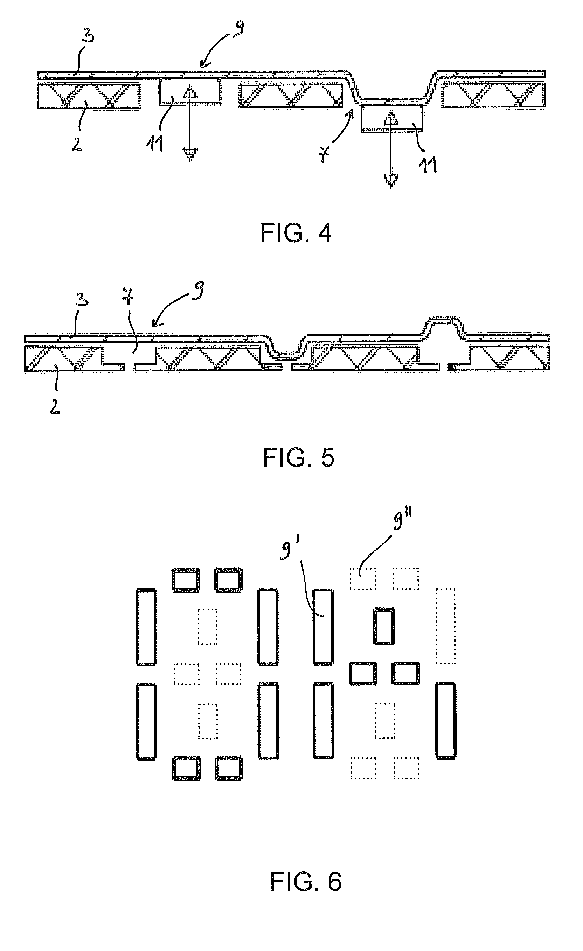

The active zones 9 may be raised or engraved by direct or indirect application of a pushing or pulling force F to the flexible membrane 3. The active zones 9 of membrane 3 have the same shape of the apertures 6 of the substrate 2, which may be for example the shape of characters, dots, symbols or elements of one or more segment displays (see also Fig. 6).

Fig. 4 is a scheme of a direct contact embodiment, where a piston-like element 11 fixed to the membrane 3 can be displaced up and down in the cavity 7. Each cavity 7 of the substrate 2 has its own piston-like element 11 and as a consequence, each of the active zones 9 can be actuated selectively and independently.

Fig. 5 is a basic scheme of indirect contactless embodiment, where active zones 9 are actuated by inducing a suitable pressure (or underpressure) in the cavities 7, then a differential pressure across the membrane 3. The outer face 4 is exposed to an ambient pressure, which is normally the atmospheric pressure (1 bar); by inducing a greater or lower pressure in a cavity 7, the corresponding active zone 9 will be raised or engraved as shown. The pressure can be transmitted by a gas (preferably air) or by a liquid medium.

In all the embodiments, the selective application of force to a certain subset of the active zones 9 will produce a pattern of raised or engraved portions of said membrane 3. Said pattern will produce a message or information clearly recognizable on the surface 4.

Fig. 6 shows an example where the apertures 6 (and hence the active zones 9) are arranged according to a multi-segment display and raised or engraved portions form the message OK. The numeral 9' denotes one of the active portions which are excited (raised or engraved) and then visible, while numeral 9" denotes one of the non-excited active portions (dotted line) where the membrane 3 remains relaxed. The non-excited portions 9" remain invisible, being part of the flat surface of the membrane 3.

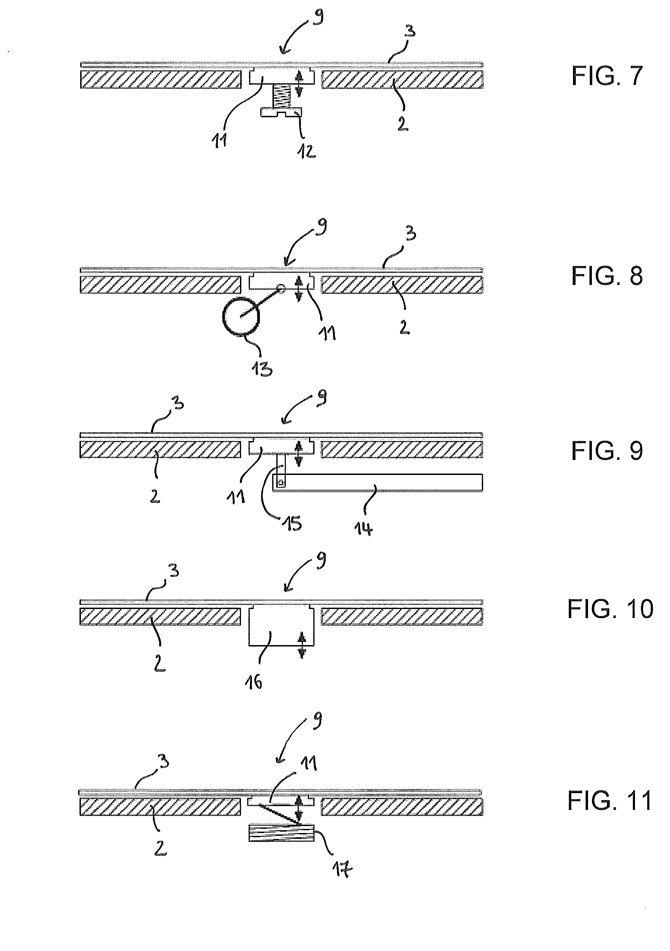

Figs. 7 to 11 show various implementations of the direct-contact embodiment of Fig. 4.

In Fig. 7, the piston-like element 11 is actuated by a motor (not shown) via a screw 12.

In Fig. 8, the piston-like element 11 is actuated by a servomotor 13.

In Fig. 9, the piston-like element 11 is actuated by a SMA lever 14. The SMA lever 14 includes a piece of a suitable shape memory alloy which is able to change its shape depending on temperature. Hence a variation of temperature, which is for example induced by an electric current, will change the shape and/or length of the lever 14 and move up or down the piston 11. The device may include a link 15, which may be designed to amplify the stroke of the SMA lever 14.

In Fig. 10, the active zones 9 of membrane 3 are directly fixed to a piece 16 of an electro-active polymer (EAP). In a preferred embodiment, said EAP 16 is fixed to the membrane 3 without an intermediate piston 11. A particular advantage of this embodiment is the easy assembly.

In Fig. 11, the piston-like element 11 is actuated by one or more piezoelectric device(s) 17. More than one piezo-electric device(s) 17 may be connected in series to sum their stroke, or an amplification connecting lever may be used.

In the above embodiments, the active member may be partially or totally received in the thickness of the substrate 2. In particular, the SMA, EAP or piezo- devices may be practically embedded in the substrate 2, thus reducing the overall thickness of the display.

In all the above embodiments, the mechanical actuator can be at least partially or fully accommodated in a corresponding recess of the substrate. More preferably, the mechanical actuator is fully contained in the thickness of the substrate.

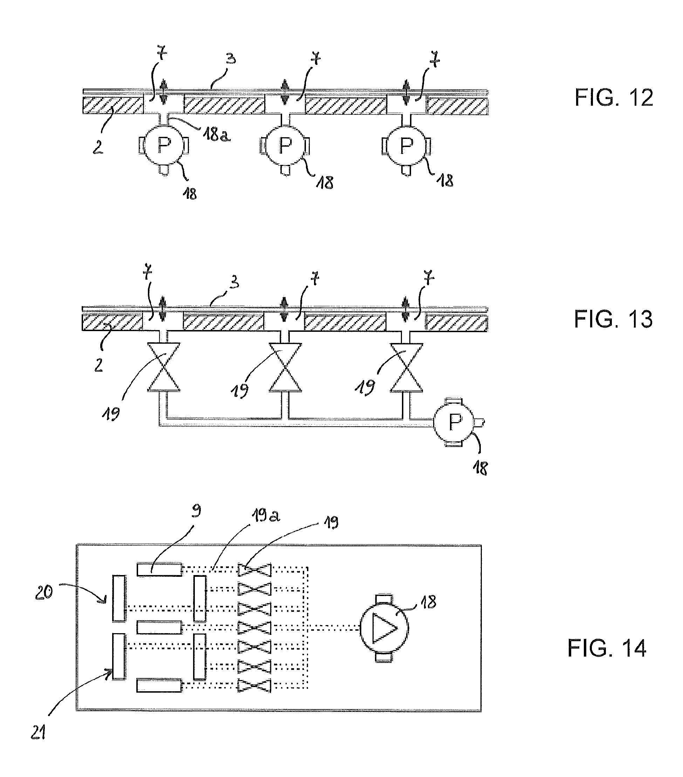

Figs. 12 to 14 are basic schemes of contactless embodiments, where the membrane 3 is deformed by a difference of pressure.

In Fig. 12, the selective actuation of the active zones 9 is obtained by connecting a respective pump 18 to each one of the cavities 7, e.g. via channels 18a. The pumps 18 can be operated singularly and independently, to produce any pattern of embossed or engraved portions of the membrane 3.

In Fig. 13, the same purpose as above is reached by using one common pump 18 and a valve system including a valve 19 for each cavity 7. Hence, the single pump 18 produces a pressure or suction which is transferred to a selected set of said cavities 7 by the control system selectively opening or closing the corresponding valves 19.

Fig. 14 shows the scheme of Fig. 13, applied to a multitude of active zones 9 which are arranged to form a seven segment display 20. Each active zone 9 is a segment 21 of the display 20, and has a respective channel 19a and valve 19 for connection with the common pump 18. By controlling the valves, alphanumeric characters are produced on the display 20.

It can be appreciated that Fig. 14 is given merely as an example and more sophisticated embodiments are possible, e.g. segment displays with a higher number of segments (e.g. fourteen or sixteen), or a dot matrix providing a higher resolution.

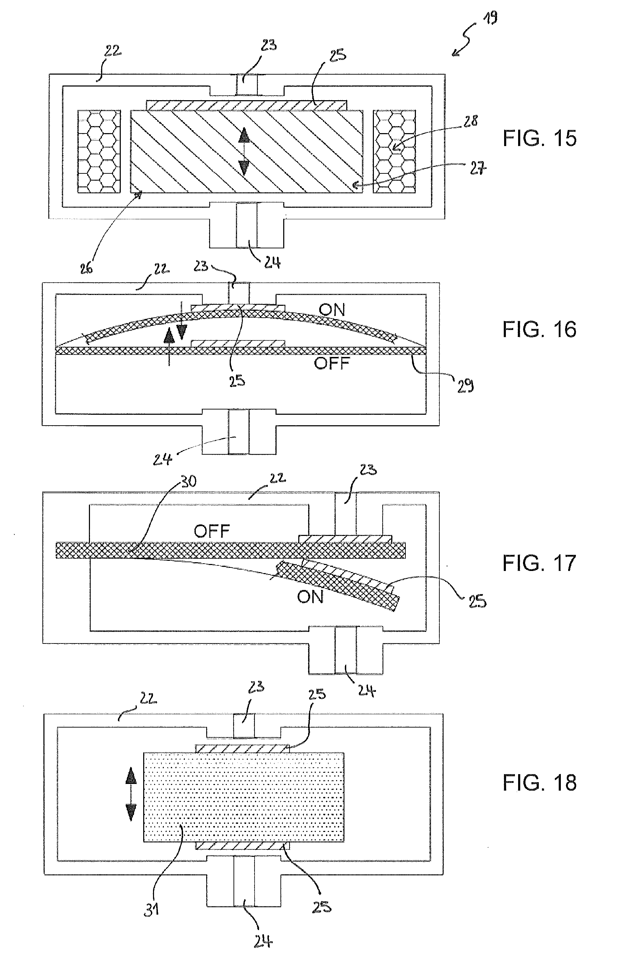

Figs. 15 to 18 show some preferred embodiments of said valves 19. A valve 19 has a body 22 and at least a first passage and a second passage 23, 24. At least one of said passages, for example the passage 23, can be obstructed by a membrane shutter 25, to close the valve. According to the various embodiments of the figures, the shutter 25 is operated by an electric motor 26 including a magnet 27 and a coil 28; a piezo-electric device 29; a SMA blade 30; an EAP device 31.

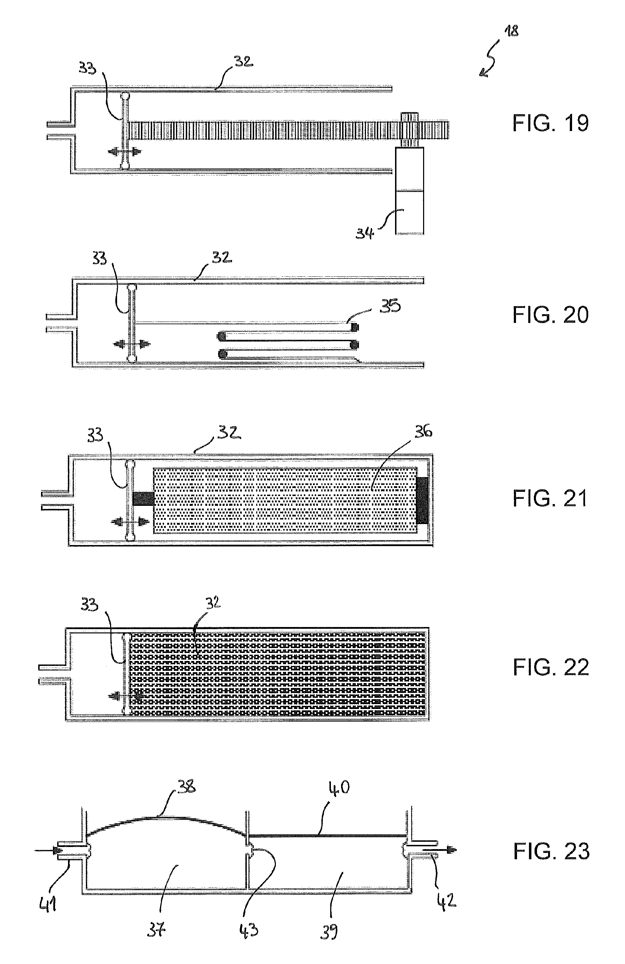

The above techniques may also be applied to the pump(s) 18. Figs. 19 to 23 show exemplary embodiments of displacement pumps which can be used to implement the invention.

In Figs. 19 to 22, the pump 18 comprises essentially a cylinder 32 and a piston 33 sliding in the cylinder 32. In Fig. 19, the piston 33 is actuated by a motor 34; in Fig. 20 by a SMA wire 35; in Fig. 21 by a block 36 of EAP; in Fig. 22 by a change of volume of a suitable medium contained in the cylinder 32, induced by heating or cooling, possibly due to a change of phase (liquid to gas or vice-versa) of at least a portion of said medium.

Fig. 23 shows a piezoelectric embodiment of a pump, including a plurality (for example two) of chambers in series, each chamber having at least one wall made with a piezoelectric membrane. A first chamber 37 has a first piezo-membrane 38 and a second chamber 39 has a second piezo-membrane 40. The first chamber 37 has a suction opening 41 and the second chamber 39 has a delivery opening 42. The chambers are connected by a one or more one-way passage(s) 43 which allows passage of a fluid from the chamber 37 to the chamber 39, as indicated by the arrows. By alternately raising and lowering the piezo-membranes 38 and 40, a fluid is loaded into the chamber 37 from the inlet 41 and then passed in the second chamber 39 and further compressed for delivery.

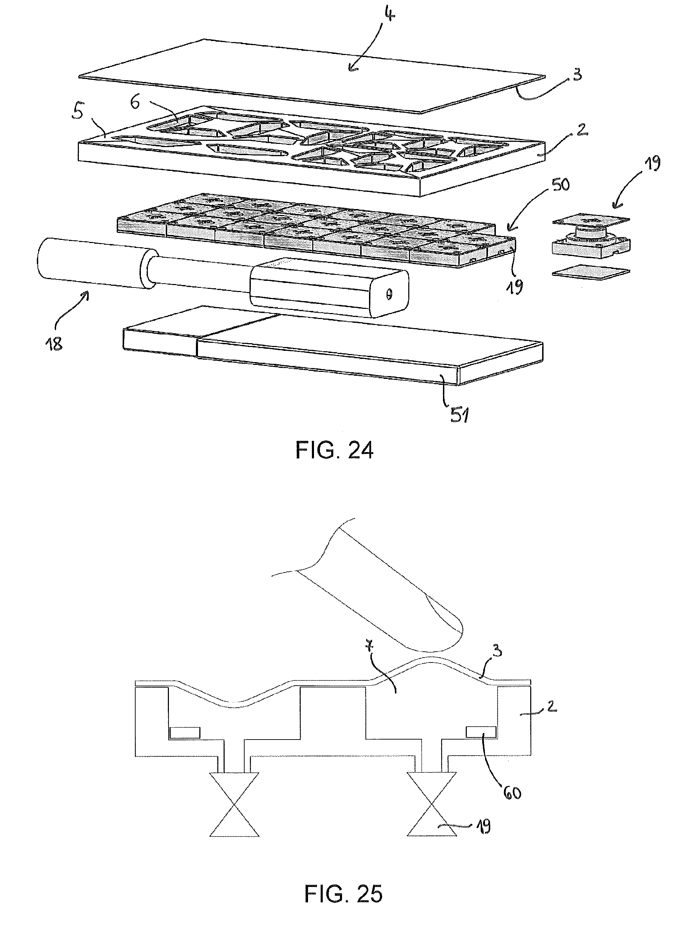

Fig. 24 shows an embodiment of a display according to the invention, wherein the valves 19 are shaped as small tiles and adjoined each other, thus forming a valve layer 50 under the substrate 2. The figure also shows a battery 51 and a single pump 18, which are the main components of the display.

Fig. 25 shows a further embodiment of the invention, including pressure sensors 60 in at least some of the cavities 7 of the substrate. Accordingly, a pressure made by a user on the layer 3 can be detected. In a preferred embodiment, some of the active zones are engraved to display information, and some other active zones, where pressure sensors 60 are installed, are raised (embossed) to provide input means.

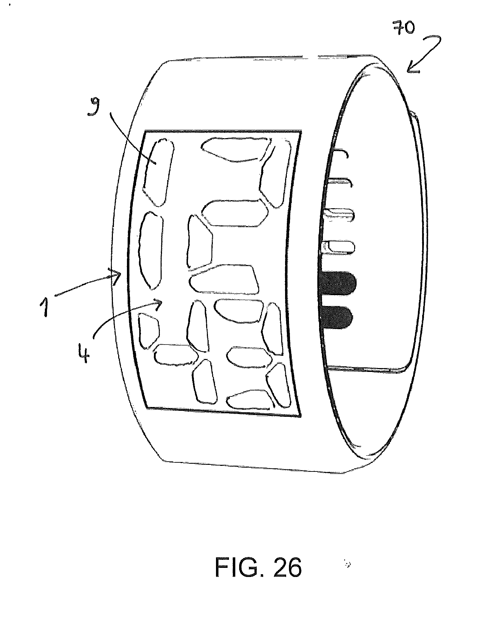

Fig. 26 shows an example of an item including a display according to the invention. The figure illustrates in particular an example of a wristwatch 70 with a display 1 according to the invention.

## Claims

1. A display (1):
comprising a substrate (2) and a flexible layer (3) over said substrate,
said substrate having a top surface (5) facing the flexible layer;
said flexible layer (3) being of an opaque material and having an outer face (4) opposite to the substrate which provides a displaying surface,
said top surface (5) of the substrate (2) having a plurality of apertures (6);
said display comprising output means adapted to individually and independently apply a mechanical action to said flexible layer (3) through each one of said apertures (6) of the substrate,
the mechanical action applicable through an aperture (6) of the substrate being suitable to induce a local reversible deformation of a portion (9) of said flexible layer lying above said aperture,
said display comprising control means adapted to determine a subset of said apertures (6) where the action of said output means is selectively applied to the flexible layer, in accordance to an input pattern, thus providing a corresponding pattern of deformed portions of the flexible layer, providing information displayed on said displaying surface (4).

2. A display according to claim 1, said output means being arranged to apply an inward force directed toward the substrate (2), the deformed portions of the flexible layer (3) being engraved relative to relaxed portions of said layer.

3. A display according to claim 1 or 2, said output means comprising a respective and independent mechanical actuator for each aperture (6) of the substrate, arranged to directly apply said force to the flexible layer at the corresponding aperture of the substrate.

4. A display according to claim 3, each of said mechanical actuators comprising an electric motor or an active member which is adapted to switch between a first shape and a second shape upon activation, thus providing a controlled displacement which is transmitted to the flexible layer, said active member being preferably any of: a shape memory alloy (SMA) actuator; an electro-active polymer (EAP) actuator; a piezoelectric actuator.

5. A display according to claim 4, each mechanical actuator being directly fixed to the flexible layer (3).

6. A display according to claim 1, wherein:
said output means are configured to provide a pressure on an inner face (8) of the flexible layer (3) facing the aperture (6), in a selected set of said apertures according to said input pattern, producing a corresponding pattern of deformed and relaxed portions of the flexible layer.

7. A display according to claim 6, including a respective pump (18) for each of the apertures of the substrate.

8. A display according to claim 6, including a single pump or a plurality of pumps (18), wherein said pump or each of said pumps is connected to a plurality of said apertures via a valve system including at least an individual valve (19) for each of said apertures or subgroup of apertures, each of said valves being selectively and independently controlled.

9. A display according to claim 7 or 8, said pump(s) being actuated by any of: electric motor, shape memory alloy (SMA) actuator; an electro-active polymer (EAP) actuator; a piezoelectric actuator, a change of volume or a change of phase of a suitable medium.

10. A display according to claim 8 or 9, said valves (19) comprising a shutter (25) movable between an open position and a close position, and an active member to operate said shutter, the active member having at least a relaxed position where the shutter is in one of said open and close position, and an excited position where the shutter is in the other of said positions, and said active member including any of: a coil and a magnet; a shape memory alloy (SMA) member; an electro-active polymer (EAP) member; a piezoelectric member; a micro electro mechanical system (MEMS).

11. A display according to claim 10, said valves (19) being arranged to form a valve layer (50) under the substrate (2).

12. A display according to any of the previous claims, wherein the apertures of the substrate and the active zones of the display are arranged as dots of a dot-matrix display, and/or they are arranged as one or more multi-segment display to show alphanumeric characters.

13. A display according to any of the previous claims, wherein at least some of the apertures of the substrate are in communication with a respective pressure sensor (60), to detect a pressure exerted on the flexible layer above the aperture, the display thus being able to deliver a corresponding input signal.

14. A display according to any of claims 1 to 13, said displaying surface (4) being flat or curved.

15. A device comprising a display according to any of the previous claims, preferably a portable device and more preferably a wristwatch (70).
